(19) Europäisches Patentamt / European Patent Office / Office européen des brevets

(11) **EP 4 174 793 A1**

(12) **EUROPEAN PATENT APPLICATION**

(43) Date of publication:
**03.05.2023 Bulletin 2023/18**

(21) Application number: **21204934.0**

(22) Date of filing: **27.10.2021**

(51) International Patent Classification (IPC):
**G06V 10/82** (2022.01) **G06V 20/58** (2022.01)

(52) Cooperative Patent Classification (CPC):
**G06V 10/82; G06V 20/58**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Continental Autonomous Mobility Germany GmbH**
**85057 Ingolstadt (DE)**

(72) Inventor: **Trenka, Attila Raul**
**90411 Nürnberg (DE)**

(74) Representative: **Continental Corporation**
**c/o Continental Automotive GmbH**
**Intellectual Property**
**Nordostpark 30**
**90411 Nürnberg (DE)**

(54) **METHOD AND SYSTEM FOR IMPROVING PERFORMANCE OF CAMERA-BASED DETECTION ALGORITHM**

(57)     The invention relates to a system and a method for improving a detection algorithm of a driving assistance system. The system according to invention comprises at least one imaging device (10) for detecting objects in the surrounding of the vehicle, a processing device (20) and a controller device (30). The system is configured to:
- receive image data from the imaging device/sensor (10), said image data regarding objects detected in the surrounding of the vehicle,
- pre-process image data by means of a pre-processing device (210) and providing pre-processed image data,
- process the pre-processed image data according to a trained model generated by means of a model training device (220) and providing detections,
- post-process the detections by means of a post-processing device (230),
- provide post-processed detections to the controller device (30), whereby a control decision is taken,
- send the taken control decision to at least one processor of the vehicle driving system by means of communication means.

The model training device (220) is part of the processing device (20) and has a composed neural network architecture that comprises:
- a main neural network (f) designed to use weights (w) for mapping the pre-processed image to a detection output of the mentioned main neural network (f), and
- a teacher neural network (fo) designed to use weights $(w_0)$ to produce weights (w) for the main neural network (f).

Fig. 1

**Description**

The present invention relates generally to camera-based detection algorithms, and more specifically, the invention relates to a method and a system for improving performance of a camera-based detection algorithm of a vehicle driving automated system.

Automated Driving Systems (ADS), meaning hardware and software collectively capable of performing dynamic driving tasks on a sustained basis are seen as the wider mobility solution for high pollution levels and management of the transport infrastructure in places of high population density. Acceptance of self-driving vehicles relies heavily on the performance of the technology behind the concept; in this context, artificial intelligence techniques are widely deployed to enhance said technological performance, Deep Neural Network being just one of such techniques that learn function approximations.

In order to achieve the performance standard imposed by automated driving systems, self-driving vehicles are built with camera systems that can detect and track all the objects around them. Therefore, one of the major challenges associated with such camera systems is the balance of computing power, memory, bandwidth, frame rate and accuracy - to name just few specific parameters -, while the end-product (i.e., the camera system) needs to provide the most possible functionality.

In this respect, over-parametrization creates a problem by consuming time and power. On the other side, over-parametrization is a condition sine qua non for training a neural network to recognize various objects and to classify them accordingly in applications such as detection, segmentation and localization. Especially deep learning neural networks are concerned, where complex, powerful architectures require hundreds of thousand or even millions of parameters to be trained (see "Learning and Generalization in Overparameterized Neural Networks, Going Beyond Two Layers", by Zeyuan Allen-Zhu, Yuanzhi Li, Yingyu Liang, paper submitted on 12 November 2018 and last revised on 1st June, 2020, source: arXiv: 1811.04918). There are several papers discussing the necessity of large number of parameters for deep learning networks in order to learn, employing variations of Stochastic Gradient Descent (SGD) (see for example, "An overview of gradient descent optimization algorithms", by Sebastian Ruder, paper submitted on September 15th, 2016, last revised on June 15th, 2017, source: arXiv:1609.04747 or "Nearly Minimal Over-Parametrization of Shallow Neural Networks", by Armin Eftekhari, ChaeHwan Song, Volkan Cevher, submitted on October 9th, 2019, last revised on October 29th, 2019, source: arXiv: 1910.03948).

However, in comparison with such large number of parameters needed for training, the data samples that can be provided by usual means is low; for tackling such scarce data samples small network should be employed. A small network is hard to train. Possible solutions are either to find a subnetwork that, when trained, matches the test accuracy of the main network (as described in the paper "The Lottery Ticket Hypothesis: Finding Sparse, Trainable Neural Networks", written by Jonathan Frankle and Michael Carbin, and submitted on 9th March 2018, last revised on 4 March 2019, source: arXiv:1803.03635), or to eliminate connections that contribute the least to the end result (such pruning method being disclosed by the paper "Optimal Brain Damage", written by Yann Le Cun, John S. Denker and Sara A. Solla, publisehd on January 1989, for the Conference "Advances in Neural Information Processing Systems" 2:598-605, [NIPS Conference, Denver, Colorado, USA, November 27-30, 1989]), or to use a large network to learn from the main function and then use the raw outputs of the large network to train a smaller one, technique known as knowledge distillation (as described by "Distilling the Knowledge in a Neural Network" of Geoffrey Hinton, Oriol Vinyals, Jeff Dean, submitted March 9th, 2015, source: arXiv: 1503.02531). Nevertheless, after training, the inference time is limited, though.

It is an objective of the invention to provide an improved neural network architecture and to improve performance of a machine-learned detection algorithm paired with limited inference time. The objective is solved by the independent claims. Preferred embodiments are given in the dependent claims.

According to an aspect, the invention refers to a system for improving performance of a detection algorithm of a vehicle driving system. Said performance improving system comprises at least one imaging device for detecting objects in the surrounding of a vehicle, a processing device and a controller device. The system is configured to receive image data from the imaging device/sensor, said image data regarding objects detected in the surrounding of the vehicle; to pre-process image data by means of a pre-processing device and providing pre-processed image data; to process the pre-processed image data according to a trained model generated by means of a model training device and providing detections; to post-process the detections by means of a post-processing device; to provide post-processed detections to the controller device, whereby a control decision is taken; to send the taken control decision to at least one processor of the vehicle driving system by means of communication means. The model training device is part of the processing device and has a composed neural network architecture that comprises: a main neural network designed to use weights for mapping the pre-processed image to a detection output of the mentioned main neural network, and a teacher neural network designed to provide training weights to the main neural network.

Said architecture is advantageous because the hardship of training networks not largely overparametrized is eliminated.

According to an embodiment, the teacher neural network is fed with a constant, said constant being referred to as key. The advantage of this embodiment is that the inventive system protects training data by producing mapping weights only when a predetermined condition is fulfilled, meaning the correct key is provided.

According to a further embodiment, each of the neural networks involved may be a deep neural network.

According to a further aspect, the invention relates to a method for improving performance of a detection algorithm of a driving assistance system. The method comprises the steps of: providing a vehicle-based driving system comprising at least one imaging device for detecting objects in the surrounding of the vehicle, a processing module implementing a detection algorithm for providing detection results, and a controller device; receiving image data from the imaging device/sensor, said image data regarding objects detected in the surrounding of the vehicle; pre-processing image data by means of a pre-processing device and providing pre-processed image data; processing the pre-processed image data according to a trained model by means of a model training device and providing detections; post-processing the detections by means of a post-processing device; providing post-processed detections to the controller device, whereby a control decision is taken; sending the taken control decision to at least one processor of the vehicle driving system by means of communication means. The method further comprises the steps of: composing two neural networks, namely a main neural network and a teacher neural network; training teacher network to provide weights to the main network, wherein said training consists of feeding the teacher network with a constant referred to as key; inferencing the teacher network to sample mapping weights, provided the same constant is fed as key; using the trained networks to generate, by means of the model training device, the trained model used to process image data.

Said method proves to be advantageous because the inference time is reduced drastically.

The various aspects of the invention, including its particular features and advantages, will be readily understood from the following detailed description and the accompanying drawings, in which:

Fig. 1 shows an illustration of a camera-based system dataflow, the camera-based detection algorithm implemented on an automated driving system of a vehicle,

Fig. 2 illustrates a block diagram of an architecture for improving performance of a detection algorithm based on trained machine-learning technology; and

Fig. 3 shows a schematic block diagram illustrating the steps of a method for improving performance of a detection algorithm.

The term "vehicle" as used in the present disclosure may refer to a car, truck, bus, train or any other crafts.

The term "imaging device" may refer to any instrument capable of recording, storing, viewing or transmitting visual images, for example, a video camera.

The term "deep neural network" may refer, in the context of this invention, to a deep neural network (DNN) used to detect objects on a camera image. The deep neural network consists of an architecture (connections, layers), parameters (weights) and hyperparameters.

The term "detections" may refer to instances of semantic objects/entities detected in digital images and videos.

The term "classification" may refer to assigning the detected object to one of multiple groups or classes (such as humans, buildings or cars) in digital images and videos.

The term "noise" (or "jitter" or "random jitter") means samples of data with a configurable mean and a standard deviation of configurable value.

The present invention will now be described more fully with reference to the accompanying drawings, in which example embodiment is shown. The embodiment in the figures may relate to preferred embodiment. However, this invention should not be construed as limited to the embodiment set forth herein. Throughout the following description similar reference numerals have been used to denote similar elements, parts, items or features, when applicable. The features of the present invention disclosed in the specification, the claims, examples and/or the figures may both separately and in any combination thereof be material for realizing the invention in various forms thereof.

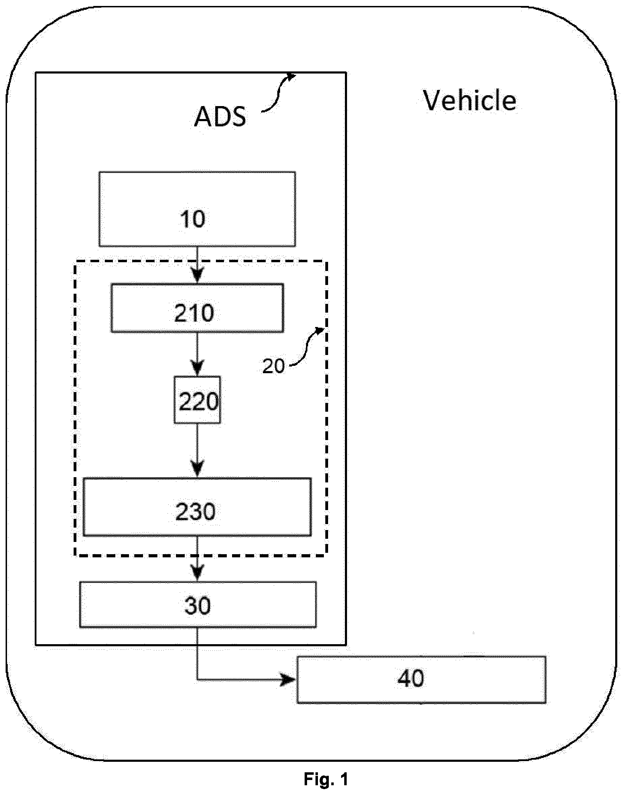

Fig. 1 shows a diagram depicting dataflow in a camera-based system, component of an assisted or an automated driving system ADS of a vehicle. A sensor/imaging device 10, for example a camera, acquires at least one image from surroundings of the vehicle. The captured image is then processed by a processing module 20 comprising a pre-processing device 210 and a post-processing device 230. Pre-processing device 210 prepares the image and provides it as input to a model training device 220, namely a composed deep neural network that is trained to further extract detections out of the pre-processed image, based on the trained model. The extracted detections are post-processed by means of post-processing device 230. Finally, a control decision (i.e., a command) is taken based on the post-processed detections by a control device 30. The command is sent to a communication device 40, that can be an internal communication bus or any other means suitable to transmit the command the taken decision to the vehicle core processor.

According to the example from Fig. 1, the sensor/imaging device 10 is, for example, a forward-looking camera configured to detect objects as, for example, lane markers of the road on which the subject vehicle is moving or obstacles in the surroundings of the vehicle.

Referring again to Fig. 1, the sensor/imaging device 10 provides information regarding detected objects to processing device 20. Said information are raw sensor data. Said processing device 20 may process said information according to the trained model by deriving processed image data, also referred to as detections. Said processing may comprise pattern recognition, semantic segmentation, free space detection, lane detection, depth detection etc.

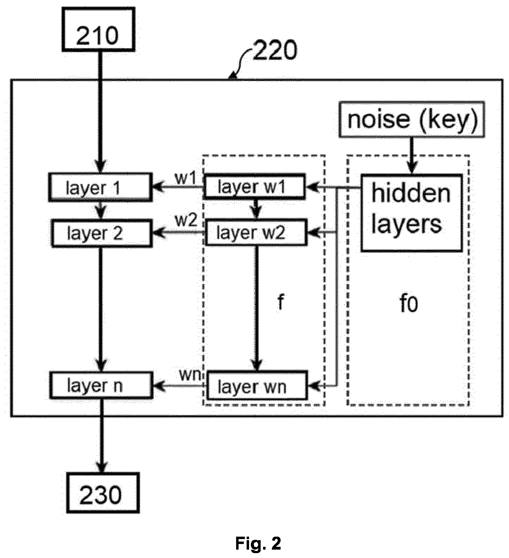

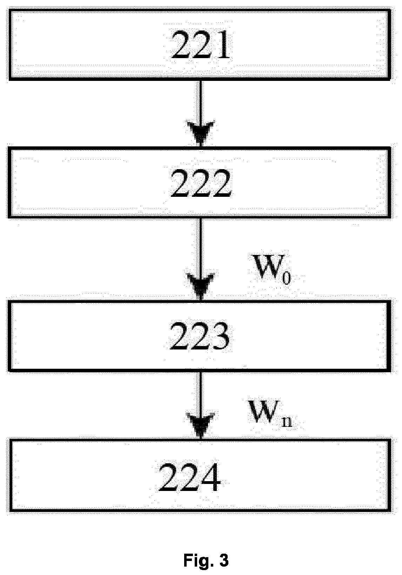

In the following, based on Fig. 2 and 3, a composed neural network architecture for improving detection performance of a machine-learned detection algorithm of a vehicle-based driving system is disclosed.

As shown in Fig. 2, the composed neural network, which may be a composed deep neural network DNN, comprises basically two networks: a main deep neural network f with $n$ layers, and a teacher deep neural network $f_0$ comprising hidden layers, fed with noise. Noise is designed to help the training the teacher network $f_0$ to provide weights $w_1$, $w_2$, ...$w_n$ for a series of $n$ layers of a main network f. The most usual example of noise may be Gaussian noise, or white noise, that can be generated using a pseudorandom number generator. The amount of noise added is a configurable hyperparameter itself. In the embodiment of this invention presented here, the mean value of the noise, basically a constant referred as c, functions as a key that is used to reconstruct the network weights of f at inference step.

Given a problem of mapping an input into an output that can be approximated by a neural network, this could be expressed as

$$y = f(x, w) \qquad (1)$$

where:

- x is input data,
- y is output data of the neural network,
- $f$ is the function that describes the neural network and
- w are the network weights.

Given y = $f(x, w)$, it is created a teacher network $f_0$ to provide weights w:

$$w = f_0(c, w_0) \qquad (2)$$

and thus, to have:

$$y = f(x, f_0(c, w_0))$$

In the embodiment of this invention, the pre-processed image is the input data x, while the output data y (detections) may be a combination of object detection, semantic segmentation, free space detection, depth or other detection tasks for neural network. After training the output of teacher network $f_0$, the obtained output of

$f_0$ may be used as a constant for the weights of main network $f$, thus inference time is reduced drastically. Training in case of the composed network proceeds as usual with backpropagation, as described by S. Linnainmaa, "The representation of the cumulative rounding error of an algorithm as a Taylor expansion of the local rounding errors", Master thesis, Univ. Helsinki, 1970, chapters 6-7 and code on pages 58-60.

Fig. 3 shows a schematic block diagram of a method of training the composed deep neural network employed for improving the performance of the detection algorithm, wherein the block diagram illustrates steps and parameters used for respective steps, respectively.

Having count($w_n$) a minimal number of parameters to implement the mapping of input data and count(wo) a minimal number of parameters to train the main network f, the teacher network is created to provide training weights $w_0$ so that the main network f to have sufficient parameters to be trainable. In this respect, a step S221 provides composing the two neural networks, followed by step S222: training teacher network based on noise feeding to provide training weights $w_0$ to train the main network f. Follows third step S223: inference main network f to sample mapping weights $w_1$,...,$w_n$, followed by fourth step S224: using the trained networks $f_0$ and f to generate the trained model used to process image data.

The architecture of the networks is not discussed because the contribution is the means of producing the weights of the network $f$, regardless of the inner architecture of this. Likewise, the architecture of $f_0$ is a parameter of the system.

It should be noted that the description and drawings merely illustrate the principles of the proposed invention. Those skilled in the art will be able to implement various arrangements that, although not explicitly described or shown herein, embody the principles of the invention.

**List of reference numerals**

| ADS | Assisted or automated driving system |
|---|---|
| 10 | Camera/Imaging device |
| 20 | Processing device |
| 30 | Controller device |
| 40 | Communication device |
| 210 | Pre-processing device |
| 220 | Model training device based on a composed neural network |
| 230 | Post-processing device |
| S221...S224 | Steps of training method of the composed neural network |
| $f_0$ | Function expression of teacher network |
| $w_0$ | Weights of the teacher network |
| f | Function representation of the main network |

w      Weights of the main neural network
c      Key expressed by a constant
DNN      Deep Neural Network

**Claims**

1. System for improving performance of a detection algorithm of a vehicle driving system, the system comprising at least one imaging device (10) for detecting objects in the surrounding of the vehicle, a processing device (20) and a controller device (30), wherein the system is configured to:

   - receive image data from the imaging device/sensor (10), said image data regarding objects detected in the surrounding of the vehicle,
   - pre-process image data by means of a preprocessing device (210) and providing pre-processed image data,
   - process the pre-processed image data according to a trained model generated by means of a model training device (220) and providing detections,
   - post-process the detections by means of a post-processing device (230),
   - provide post-processed detections to the controller device (30), whereby a control decision is taken,
   - send the taken control decision to at least one processor of the vehicle driving system by means of communication means,
   **characterized by that** the model training device (220) is part of the processing device (20) and has a composed neural network architecture that comprises:
   - a main neural network (f) designed to use weights (w) for mapping the pre-processed image to a detection output of the mentioned main neural network (f), and
   - a teacher neural network ($f_0$) designed to provide weights (w) for the main neural network (f).

2. System according to claim 1, **characterized by that** the teacher neural network ($f_0$) is designed to be fed with a constant, said constant being referred to as key (c).

3. System according to claim 1 or 2, **characterized by that** the main network (f) provides the correct mapping weights (w) only in case the same constant (c) is fed as key at inference.

4. System according to claim 1, **characterized by that** both neural networks (f, $f_0$) are deep neural networks.

5. Method for improving performance of a detection algorithm of a vehicle driving system, the method comprising the steps of:

   - providing a vehicle-based driving system comprising at least one imaging device (10) for detecting objects in the surrounding of the vehicle, a processing module (20) implementing a detection algorithm for providing detection results, and a controller device (30),
   - receiving image data from the imaging device/sensor (10), said image data regarding objects detected in the surrounding of the vehicle,
   - pre-processing image data by means of a pre-processing device (210) and providing pre-processed image data,
   - processing the pre-processed image data according to a trained model by means of a model training device (220) and providing detections,
   - post-processing the detections by means of a post-processing device (230),
   - providing post-processed detections to the controller device (30), whereby a control decision is taken,
   - sending the taken control decision to at least one processor of the vehicle driving system by means of communication means,
   **characterized by that** the method further comprises the steps of:

   - (S221) composing two neural networks (f, $f_0$), namely a main neural network (f) and a teacher neural network ($f_0$),
   - (S222) training teacher network ($f_0$) to provide weights (w) to the main network (f), wherein said training consists of feeding the teacher network with a constant (c) referred to as key,
   - (S223) inferencing the teacher network ($f_0$) to sample mapping weights (w), provided the same constant (c) is fed as key,
   - (S224) using the trained networks ($f_0$ and f) to generate, by means of the model training device (220), the trained model used to process image data.

6. Method according to claim 5, wherein the processing of the image data comprises detecting objects in the image data.

**Fig. 1**

**Fig. 2**

**Fig. 3**

**EP 4 174 793 A1**

# EUROPEAN SEARCH REPORT

Application Number

EP 21 20 4934

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 832 341 A1 (NVIDIA CORP [US]) 9 June 2021 (2021-06-09) * the whole document * | 1-6 | INV. G06V10/82 G06V20/58 |
| A | JIANPING GOU ET AL: "Knowledge Distillation: A Survey", ARXIV.ORG, CORNELL UNIVERSITY LIBRARY, 201 OLIN LIBRARY CORNELL UNIVERSITY ITHACA, NY 14853, 20 May 2021 (2021-05-20), XP081949624, DOI: 10.1007/S11263-021-01453-Z * the whole document * | 1-6 | |
| A | HAORAN ZHAO ET AL: "Dual Discriminator Adversarial Distillation for Data-free Model Compression", ARXIV.ORG, CORNELL UNIVERSITY LIBRARY, 201 OLIN LIBRARY CORNELL UNIVERSITY ITHACA, NY 14853, 12 April 2021 (2021-04-12), XP081935239, * the whole document * | 1-6 | |
| A | LIANGCHEN LUO ET AL: "Large-Scale Generative Data-Free Distillation", ARXIV.ORG, CORNELL UNIVERSITY LIBRARY, 201 OLIN LIBRARY CORNELL UNIVERSITY ITHACA, NY 14853, 10 December 2020 (2020-12-10), XP081833774, * the whole document * | 1-6 | TECHNICAL FIELDS SEARCHED (IPC) G06V |

The present search report has been drawn up for all claims

| Place of search | Date of completion of the search | Examiner |
|---|---|---|
| The Hague | 25 March 2022 | de Castro Palomares |

EPO FORM 1503 03.82 (P04C01)

## ANNEX TO THE EUROPEAN SEARCH REPORT
## ON EUROPEAN PATENT APPLICATION NO.

EP 21 20 4934

This annex lists the patent family members relating to the patent documents cited in the above-mentioned European search report.
The members are as contained in the European Patent Office EDP file on
The European Patent Office is in no way liable for these particulars which are merely given for the purpose of information.

25-03-2022

| Patent document cited in search report | | Publication date | Patent family member(s) | | Publication date |
|---|---|---|---|---|---|
| EP 3832341 | A1 | 09-06-2021 | CN | 112825134 A | 21-05-2021 |
| | | | EP | 3832341 A1 | 09-06-2021 |
| | | | JP | 2021082294 A | 27-05-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZEYUAN ALLEN-ZHU ; YUANZHI LI ; YINGYU LIANG.** Learning and Generalization in Overparameterized Neural Networks, Going Beyond Two Layers. *arXiv: 1811.04918,* 12 November 2018
- **SEBASTIAN RUDER.** An overview of gradient descent optimization algorithms. *arXiv:1609.04747,* 15 September 2016
- **ARMIN EFTEKHARI ; CHAEHWAN SONG ; VOLKAN CEVHER.** Nearly Minimal Over-Parametrization of Shallow Neural Networks. *arXiv: 1910.03948,* 09 October 2019
- **JONATHAN FRANKLE ; MICHAEL CARBIN.** The Lottery Ticket Hypothesis: Finding Sparse, Trainable Neural Networks. *arXiv:1803.03635,* 09 March 2018
- **YANN LE CUN ; JOHN S. DENKER ; SARA A. SOLLA.** Optimal Brain Damage. *Advances in Neural Information Processing Systems,* January 1989, vol. 2, 598-605
- **GEOFFREY HINTON ; ORIOL VINYALS ; JEFF DEAN.** Distilling the Knowledge in a Neural Network. *arXiv: 1503.02531,* 09 March 2015
- The representation of the cumulative rounding error of an algorithm as a Taylor expansion of the local rounding errors. **S. LINNAINMAA.** Master thesis. Univ. Helsinki, 1970, 58-60